(19) Europäisches Patentamt
European Patent Office
Office européen des brevets

(11) EP 0 643 289 B1

(12) EUROPÄISCHE PATENTSCHRIFT

(45) Veröffentlichungstag und Bekanntmachung des Hinweises auf die Patenterteilung:
**14.07.1999 Patentblatt 1999/28**

(51) Int Cl.[6]: **G01J 3/28**, G01V 5/00

(21) Anmeldenummer: **94202595.8**

(22) Anmeldetag: **09.09.1994**

# (54) Untersuchungsverfahren zur Auswertung ortsabhängiger Spektren

Inspection method for evaluating location dependent spectra

Procédé d'inspection pour évaluer des spectres dépendant de la localisation

(84) Benannte Vertragsstaaten:
**DE FR GB**

(30) Priorität: **15.09.1993 DE 4331317**

(43) Veröffentlichungstag der Anmeldung:
**15.03.1995 Patentblatt 1995/11**

(73) Patentinhaber:
- **Philips Patentverwaltung GmbH**
  **22335 Hamburg (DE)**
  Benannte Vertragsstaaten:
  **DE**
- **Koninklijke Philips Electronics N.V.**
  **5621 BA Eindhoven (NL)**
  Benannte Vertragsstaaten:
  **FR GB**

(72) Erfinder: **Blaffert, Thomas, Dr.**
**D-20097 Hamburg (DE)**

(74) Vertreter: **Hartmann, Heinrich, Dipl.-Ing. et al**
**Philips Patentverwaltung GmbH,**
**Röntgenstrasse 24**
**22335 Hamburg (DE)**

(56) Entgegenhaltungen:
**EP-A- 0 354 618** **EP-A- 0 496 454**

- **ANALYTICAL CHEMISTRY, Bd.55, Nr.12, Oktober 1983, COLUMBUS US Seiten 1858 - 1862 M.L.GIANELLI ET AL. 'Multichannel Imaging Spectrophotometer for Direct Analysis of Mixtures on Thin-Layer Chromatography Plates'**
- **APPLIED SPECTROSCOPY REVIEWS, Bd.25, Nr.3/4, September 1989, NEW YORK US Seiten 229 - 259 J.H.KALIVAS 'Assessing Spectral Orthogonality'**
- **APPLIED SPECTROSCOPY, Bd.41, Nr.1, Januar 1987, BALTIMORE US Seiten 63 - 66 M.R.NYDEN ET AL. 'Computer-Assisted Spectroscopic Analysis Using Orthonormalized Reference Spectral.Part II: Application to the Identification of Pure Compounds'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Untersuchungsverfahren nach dem Oberbegriff des Anspruchs 1 sowie eine Anordnung zur Durchführung des Verfahrens.

Aus der EP-OS 462 658 ist eine Anordnung bekannt, mit der ein derartiges Untersuchungsverfahren durchgeführt werden kann. Bei dieser bekannten Anordnung, die bei der Gepäckkontrolle zur Detektion bestimmter Stoffe (Sprengstoff, Drogen) eingesetzt werden kann, werden für eine Vielzahl von Orten (nachfolgend "Voxel" genannt) im Gepäckstück die Impulsübertragsspektren gemessen. Jedes dieser Spektren wird einzeln mit den Spektren der zu identifizierenden Stoffe verglichen. Bei hinreichender Übereinstimmung kann davon ausgegangen werden, daß der gesuchte Stoff im Gepäckstück vorhanden ist, und zwar in dem Voxel, für welches das übereinstimmende Spektrum gemessen wurde.

Die bekannte Anordnung weist aber noch eine Reihe von Beschränkungen auf:

a) Wenn der gesuchte Stoff nicht in mindestens einem Voxel in so hoher Konzentration vorhanden ist, daß er das Impulsübertragsspektrum für dieses Voxel dominiert, kann er kaum nachgewiesen werden. Ein zu identifizierender Stoff - beispielsweise in Folienform - der sich über mehrere oder viele Voxel verteilt, in jedem Voxel (das man sich als Quader bzw. Würfel mit einer Kantenlänge von einigen cm vorstellen muß) aber nur in geringer Konzentration vorkommt, ist auch dann nicht nachzuweisen, wenn im Gepäckstück insgesamt relativ viel von diesem Stoff ist.

b) Wenn die verschiedenen Stoffe im Untersuchungsbereich so angeordnet wären, daß jedes Voxel bzw. das zugehörige Impulsübertragsspektrum von nur einem Stoff dominiert wird, wäre es möglich, aus den Impulsübertragsspektren zunächst die Stoffe zu identifizieren und dann deren räumliche Verteilung zu bestimmen. In der Regel ist diese Voraussetzung jedoch nicht erfüllt, so daß die räumliche Verteilung nicht bestimmt werden kann.

c) Unter der zuvor getroffenen Annahme wäre es auch möglich, das Spektrum eines unbekannten Stoffes zu bestimmen. Da ein solcher Stoff aber in der Regel über eine Anzahl von Voxeln verteilt ist, ohne in einem von ihnen zu dominieren, ist eine solche Bestimmung nicht möglich.

Aufgabe der vorliegenden Erfindung ist es, ein Untersuchungsverfahren zur kollektiven Auswertung von Spektren anzugeben, d.h. ein Verfahren, das eine Identifikation oder eine Bestimmung der spektralen oder räumlichen Verteilung auch dann ermöglicht, wenn die Stoffe im Untersuchungsbereich über mehrere Voxel verteilt sind, ohne in einem Voxel zu dominieren. Diese Aufgabe wird durch die im Hauptanspruch angegebenen Maßnahmen gelöst.

Es sei an dieser Stelle erwähnt, daß aus der Zeitschrift "Applied Spectroscopy, Volume 41, Number 1, 1987, Seiten 63 bis 66 die lineare Zerlegung einer dreidimensionalen Datenmatrix für Zwecke der Dünnschicht-Chromatographie bereits bekannt ist. Dort ist angegeben, daß diese Zerlegung nur bei einer dreidimensionalen Datenmatrix zu eindeutigen Ergebnissen führt - nicht aber bei einer zweidimensionalen (wie sie die Erfindung benutzt).

Bevor mit der Erläuterung der Erfindung begonnen wird, sollen verschiedene im Zusammenhang mit der Erfindung benutzte Begriffe erläutert werden. Als "Matrix" wird ein aus Zeilen und Spalten bestehendes rechteckiges Feld von (Zahlen)-Werten bezeichnet. Eine "Diagonal-Matrix" ist eine quadratische Matrix, die genauso viel Zeilen hat wie Spalten und bei der nur die in der Hauptdiagonalen dieser Matrix enthaltenen Elemente (das erste Element in der ersten Zeile, das zweite Element in der zweiten Zeile usw.) einen von Null verschiedenen Wert haben können. Eine (m x n)-Matrix ist eine Matrix aus m Zeilen und n Spalten. Eine transponierte Matrix wird aus einer Matrix durch Vertauschen von Zeilen und Spalten erzeugt. Das für eine Matrix verwendete mathematische Symbol wird nachfolgend groß und fett geschrieben (z.B. **X**). Eine transponierte Matrix ist durch den hochgestellten Index T gekennzeichnet (z. B. $\mathbf{X}^T$).

Als "Vektor" wird eine aus einer Folge von diskreten Zahlenwerten bestehende Größe bezeichnet, die sich auch als eindimensionale Matrix verstehen läßt. Ist ein solcher Vektor mit einer Zeile bzw. einer Spalte einer Matrix identisch, dann wird er im folgenden auch als "Zeilen-" bzw. als "Spalten-vektor" bezeichnet. Die Spalten-Vektoren der durch die Singulärwertzerlegung entstehenden ersten Matrix und die Zeilen-Vektoren der durch die Singulärwertzerlegung entstehenden dritten Matrix heißen bekanntlich auch "Singulär-Vektoren".

Als "skalare Multiplikation" zweier Vektoren wird ein Verfahren bezeichnet, bei dem das erste Element des einen Vektors mit dem ersten Element des anderen Vektors, das zweite Element des einen mit dem zweiten Element des anderen usw. multipliziert und die dadurch gebildeten Produkte addiert werden. Das aus der skalaren Multiplikation resultierende Ergebnis - das Skalarprodukt - ist eine Zahl. Wenn das Skalarprodukt den Wert Null hat, sind die beiden Vektoren zueinander orthogonal. Wenn darüberhinaus die Zahlenwerte der Vektoren so bemessen sind, daß die skalaren Produkte jedes dieser Vektoren mit sich selbst den Wert 1, mit irgendeinem anderen Vektor aber den Wert Null ergeben, dann spricht man von orthonormalen Vektoren. Sind die Spalten - oder Zeilen-Vektoren einer Matrix orthonormal, dann spricht man von einer Spalten-orthonormalen bzw von einer Zeilen-orthonormalen Matrix.

Die Erfindung basiert auf der Annahme, daß die Zahl der Stoffe mit unterschiedlichen Spektren, die im Untersuchungsbereich vorkommen, kleiner ist als die Zahl der Spektralwerte, aus denen sich ein Spektrum zusammensetzt und kleiner als die Zahl der Orte (Voxel), an denen ein Spektrum bestimmt ist.

Während die Datenmatrix spektrale Information (beispielsweise in Spaltenrichtung) und räumliche Information (in Zeilenrichtung) enthält, ist diese Information durch die Singulärwert-Zerlegung nach der Erfindung auf die drei Matrizen verteilt und daher leicht auszuwerten. Bei dieser Anordnung der Spektrum-Vektoren in der Datenmatrix enthält die erste Matrix in ihren Singulär-Vektoren (Spalten-Vektoren) ebenfalls spektrale Information, während die dritte Matrix in ihren Singulär-Vektoren (Zeilen-Vektoren) räumliche Information enthält.

Die zweite Matrix, die Diagonalmatrix, enthält nur in ihrer Hauptdiagonalen von Null verschiedene Werte, die sich aus der Zerlegung ergebenden Singulärwerte. Man kann diese Singulärwerte unterteilen in eine erste und eine zweite Gruppe, wobei alle Singulärwerte der ersten Gruppe signifikant größer sind als die Singulärwerte der zweiten Gruppe. Es wurde nun gefunden, daß die Zahl der (signifikanten) Singulärwerte der ersten Gruppe der Zahl der im Untersuchungsbereich in signifikantem Maße vorhandenen Stoffe entspricht.

Diese Information (d.h. die Zahl der signifikanten Singulärwerte) kann beispielsweise bei der Lebensmittelherstellung wichtig sein. Normalerweise befindet sich dabei im Untersuchungsbereich nur ein Stoff, so daß sich nur ein signifikanter Singulärwert ergeben wird. Enthält die zweite Matrix aber einen zweiten, signifikanten Singulärwert, dann ist dies ein Hinweis darauf, daß im Untersuchungsbereich ein zweiter Stoff vorhanden ist, z.B. Teile eines bei der Herstellung zerbrochenen Kunststoff-Werkzeugs.

Im Idealfall enthält die Diagonalmatrix in der Hauptdiagonalen soviel Matrixelemente mit von Null verschiedenem Wert, wie für den Untersuchungsbereich Stoffe (mit nicht vernachlässigbarer Konzentration) vorhanden sind. Daraus folgt, daß die Spalten-Vektoren in der ersten Matrix und die Zeilen-Vektoren in der dritten Matrix, die in der gleichen Spalte bzw. Zeile liegen, wie eines der in der Hauptdiagonalen der zweiten Matrix liegenden Matrixelemente mit dem Wert Null ohne weiteres eliminiert werden können.

In der Praxis erreichen diese Elemente aber nicht den Wert Null, sondern aufgrund zusätzlicher Einflüsse, wie beispielsweise dem bei der Messung auftretenden Rauschen, einen von Null verschiedenen Wert. Sie sind jedoch signifikant kleiner als die durch die Komponenten bedingten Werte.

Zur Reduzierung des Rechenaufwandes sieht daher eine Weiterbildung der Erfindung vor, daß die nicht signifikanten Elemente in der Hauptdiagonalen der zweiten Matrix eliminiert werden und mit ihnen die in der gleichen Spalte der ersten Matrix bzw. der gleichen Zeile der dritten Matrix befindlichen Vektoren. Die Genauigkeit der Berechnung wird durch diese Reduktion nicht wesentlich beeinträchtigt, weil die eleminierten Spalten- bzw. Zeilen-Vektoren der ersten bzw. dritten Matrix im wesentlichen nur noch Rauschen enthalten. Würde man daher die drei reduzierten Matrizen miteinander multiplizieren, dann würde als Produkt eine Matrix entstehen, die als geglättete (vom Rauschen befreite) Version der Datenmatrix interpretiert werden kann.

Eine bevorzugte Weiterbildung der Erfindung sieht vor, daß zur Identifizierung eines Stoffes mit vorbekanntem Spektrum

a) der durch die Spektralkomponenten dieses Spektrums gebildete Vektor mit den spektralabhängigen Singulär-Vektoren skalar multipliziert wird,
b) daß mit den durch die skalare Multiplikation entstehende Koeffizienten die zugehörigen spektralabhängigen Singulär-Vektoren gewichtet und summiert werden,
c) und daß der aus der Summierung resultierende Summenvektor mit dem Vektor des vorbekannten Spektrums verglichen wird.

Diese Ausgestaltung gestattet es, einen Stoff mit vorbekanntem Spektrum, beispielsweise Sprengstoff innerhalb eines Gepäckstücks, zu identifizieren, und zwar auch dann, wenn dieser so verteilt ist, daß in den verschiedenen Voxeln allenfalls nur ein kleiner Anteil von diesem Stoff vorhanden ist. Diese Weiterbildung eignet sich daher insbesondere für die Gepäckkontrolle. Demgemäß ist eine weitere Ausgestaltung gekennzeichnet durch seine Anwendung zur Detektion bestimmter Stoffe bei der Gepäckkontrolle.

Es läßt sich zeigen, daß mit Hilfe der aus der Singulärwert-Zerlegung der Datenmatrix entstehenden Matrizen die räumliche Verteilung von Stoffen im Untersuchungsbereich ermittelt werden kann, wenn deren Stoffe und deren Spektrum bekannt sind.

In Ausgestaltung der Erfindung ist daher vorgesehen, daß zur Bestimmung der räumlichen Verteilung von Stoffen mit bekanntem Spektrum

a) die durch die Spektralwerte dieser bekannten Spektren gebildeten Spektrum-Vektoren mit den spektralabhängigen Vektoren skalar multipliziert werden und daß
b) unter Heranziehung der dabei gewonnenen Koeffizienten sowie der zweiten Matrix und der aus den ortsabhängigen Vektoren bestehenden Matrix die räumliche Verteilung der Stoffe bestimmt wird.

Die Bestimmung der räumlichen Verteilung setzt also voraus, daß die im Untersuchungsbereich vorhandenen Stoffe von vornherein bekannt sind oder anhand ihres Spektrums identifiziert werden können. Diese Situation ist bei der Lebensmittelkontrolle gegeben.

Es gilt weiter, daß man mit der aus der Singulärwert-Zerlegung entstehenden zweiten Matrix den Spektrum-Vektor von Stoffen im Untersuchungsbereich ermitteln kann, deren räumliche Verteilung bekannt ist. Dementsprechend ist in Ausgestaltung der Erfindung vorgesehen, daß zur Bestimmung wenigstens eines von mehreren Stoffen, deren räumliche Verteilung innerhalb des Untersuchungsbereichs bekannt ist, die räumliche Verteilung der einzelnen Stoffe definierenden Vektoren mit den ortsabhängigen Vektoren skalar multipliziert werden, und daß aus den dabei ermittelten Koeffizienten der zweiten Matrix und der die spektralabhängigen Vektoren enthaltenden Matrix die Spektren dieser Stoffe ermittelt werden.

Eine Anordnung zur Durchführung des erfindungsgemäßen Untersuchungsverfahrens ist gekennzeichnet durch

a) eine Meßeinrichtung zur Messung je eines Spektrums für eine Vielzahl von Voxeln,
b) Mittel zur Bildung einer Datenmatrix aus den Spektrum-Vektoren, die durch die Folge der Spektralwerte jeweils eines Spektrums gebildet werden, wobei die Spektrum-Vektoren ortsabhängig in den Spalten (oder in den Zeilen) der Datenmatrix angeordnet werden,
c) Mittel zur Singulärwert-Zerlegung der Datenmatrix zur Gewinnung dreier Matrizen, deren Produkt der Datenmatrix entspricht, von denen die erste (dritte) aus spektral-abhängigen Vektoren besteht, die zweite eine Diagonalmatrix ist und die dritte (erste) aus ortsabhängigen Vektoren besteht.
d) Mittel zur Auswertung wenigstens einer der drei Matrizen.

Nachfolgend wird die Erfindung anhand eines in der Zeichnung dargestellten Ausführungsbeispiels näher erläutert. Es zeigen:

| | |
|---|---|
| Fig. 1 | eine Vorrichtung, mit der das erfindungsgemäße Verfahren durchführbar ist. |
| Fig. 2a und 2b | die Referenz-Spektren von zwei verschiedenen Stoffen, |
| Fig. 3 | ein für ein einziges Voxel aufgenommenes Spektrum, |
| Fig. 4 | ein Flußdiagramm zur Erläuterung des erfindungsgemäßen Verfahrens, |
| Fig. 5a bis 5f | die durch die Singulärwert-Zerlegung erhaltenen spektralabhängigen Vektoren, |
| Fig. 6 | die nach Größe geordneten Elemente der Spektralmatrix in logarithmischem Maßstab und |
| Fig. 7 | den aus einer Linearkombination der spektralabhängigen Vektoren errechneten Summenvektor im Vergleich zu einem Referenzspektrum. |

In Fig. 1 ist mit 1 ein Röntgenstrahler bezeichnet, der ein Röntgenstrahlenbündel 2 emittiert. Das Röntgenstrahlenbündel kann ein Nadelstrahl (pencil-beam) sein oder die Form eines Kegelmantels mit geringem Öffnungswinkel haben. Das Röntgenstrahlenbündel durchsetzt ein Objekt 3, bei dem es sich um ein Gepäckstück handeln kann. Man kann auf diese Weise aber auch einen menschlichen Körper untersuchen oder auch Nahrungsmittel. Das Röntgenstrahlenbündel 2 erzeugt in dem Objekt 3 u.a. elastisch gestreute Röntgenstrahlung (bei der elastischen Streuung - auch Rayleigh-Streuung genannt - verlieren die Röntgenquanten nach dem Streuprozeß bekanntlich nicht ihre Energie).

Die Strahlung jenseits des Untersuchungsobjekts 3 wird von einer vorzugsweise ringförmigen Detektoranordnung 4 gemessen, wobei eine zwischen dem Objekt 3 und der Detektoranordnung 4 angeordnete Kollimatoranordnung 5 dafür sorgt, daß die Detektoranordnung 4 im wesentlichen nur elastisch gestreute Röntgenstrahlung unter einem definierten Streuwinkel erfassen kann. Die Ausgangssignale der Detektoranordnung 4 werden über einen Verstärker 7 einem Impulshöhenanalysator 6 zugeführt. Die impulsförmigen Ausgangssignale der Detektoranordnung 4 haben eine zur Energie der gestreuten Röntgenquanten proportionale Amplitude, und der Impulshöhenanalysator 6 erzeugt für jeden Ausgangsimpuls ein digitales Datenwort, das die Energie des jeweils gemessenen Röntgenquants kennzeichnet. Die von dem Impulshöhenanalysator 6 gelieferten Signale entsprechen somit dem Energiespektrum der von der Detektoranordnung 4 bzw. einem dazu gehörigen Detektorelement erfaßten Röntgenquanten. - In der Regel setzt sich die Detektoranordnung aus mehreren Detektorelementen zusammen, die jeweils nur unter einem bestimmten Streuwinkel von Streustrahlung getroffen werden. In diesem Fall ist für jedes Detektorelement ein aus den Komponenten 6 und 7 bestehender Verarbeitungskanal vorgesehen.

Aus dem Energiespektrum bestimmt eine Auswerteeinheit 10, die einen nicht näher dargestellten, in geeigneter Weise programmierten Microcomputer sowie einen Speicher 9 umfassen kann, das Impulsübertragsspektrum, das beispielsweise auf einem Wiedergabemonitor 8 wiedergegeben werden kann. Der Impulsübertrag eines Röntgenquants errechnet sich nach der Formel

$$x = \sin(\beta/2)/L \qquad (1)$$

Dabei ist β der Streuwinkel, unter dem das jeweilige Röntgenquant durch den Streuprozeß abgelenkt wird und L die Wellenlänge der Streustrahlung. Da der Wert 1/L proportional zu der vom Impulshöhenanalysator 6 gemessenen Energie der Röntgenquanten ist und da der Streuwinkel β der Röntgenquanten, die von der Detektoranordnung erfaßt werden können, durch die Geometrie der Kollimatoranordnung 5 vorgegeben ist, läßt sich also ohne weiteres aus der Energie der Röntgenquanten bzw. der zugehörigen Wellenlänge L und aus dem vorgegebenen Streuwinkel β der Impulsübertrag berechnen und das Energiespektrum in ein Impulsübertragsspektrum umsetzen.

Die Kurve $R_1$ in Fig. 2a stellt das Impulsübertragsspektrum von Sprengstoff (Seismoplast) dar, während die Kurve $R_2$ in Fig. 2b das Impulsübertragsspektrum von Holz wiedergibt. Obwohl die (im folgenden auch als Referenz-Spektren bezeichneten) Spektren in beiden Fällen auf den maximalen Intensitätswert normiert sind, ist erkennbar, daß sie sich ganz wesentlich voneinander unterscheiden. Diese Unterschiede des Impulsübertragsspektrums verschiedener Stoffe sind die Basis für die Detektion bestimmter Stoffe im Untersuchungsbereich bzw. für die Ermittlung der räumlichen oder der spektralen Verteilung dieser Stoffe im Untersuchungsbereich.

Da das Streustrahlenbündel 2 jeweils nur einen kleinen Teil des Untersuchungsbereichs (ein Voxel) erfaßt, ist es erforderlich, das Objekt 3 relativ zum Strahlenbündel 2 in zwei zueinander senkrechten Richtungen (horizontal sowie senkrecht zur Zeichenebene) zu verschieben, damit die anderen Voxel des Objektes untersucht und deren Impulsübertragsspektrum ermittelt werden kann. Die Mittel für diese Relatiwerschiebung sind in Fig. 1 nicht näher dargestellt, sondern lediglich durch einen Pfeil 11 symbolisiert.

Insoweit als bisher beschrieben ist die Anordnung aus der EP-OS 462 658 sowie der DE-OS 41 01 544 bekannt. Deshalb wird wegen weiterer Einzelheiten auf diese Dokumente Bezug genommen.

Zu Demonstrationszwecken wurde als Untersuchungsobjekt 3 ein rechteckiger Behälter verwendet, der mit 5 verschiedenen Stoffen (Gummi, Holz, Kleidungsstoff, Seife und einer Sprengstoff-Folie) gefüllt war. Durch Verschieben des Untersuchungsobjekts relativ zum Strahlenbündel 2 wurden ein zweidimensionales Raster aus n = 15 x 17 Voxeln, also 255 Voxeln, abgetastet und für jedes Voxel das Impulsübertragsspektrum bestimmt.

Fig. 3 zeigt das Impulsübertragsspektrum für ein Voxel, das zu etwa 90 Vol % mit Holz und zu rund 10 Vol % mit Sprengstoff gefüllt war. Im Vergleich zu den in Fig. 2a und Fig. 2b dargestellten Spektren fällt ein verhältnismäßig starkes Rauschen auf. Dies hängt damit zusammen, daß für die Messung des Impulsübertragsspektrums für ein Voxel jeweils nur begrenzte Zeit zur Verfügung steht, während die in Fig. 2a und 2b dargestellten Referenzspektren mit sehr langer Meßzeit und damit sehr geringem Rauschen gemessen werden konnten, weil sie nur einmal gemessen werden müssen und dann in einer Bibliothek gespeichert werden. An dem in Fig. 3 dargestellten Spektrum ist praktisch nicht mehr zu erkennen, ob in dem betreffenden Voxel Sprengstoff vorhanden war oder nicht.

Das Verfahren, mit dem sich trotzdem feststellen läßt, ob in dem durch die n Voxel definierten Untersuchungsbereich Sprengstoff vorhanden ist oder nicht, soll nachfolgend anhand des in Fig. 4 dargestellten Flußdiagramms des Programmes erläutert werden, gemäß dem die Auswerteeinheit 10 die gemessenen Spektren verarbeitet.

Der erste Schritt 101 besteht in der Aufstellung einer Datenmatrix. Das in Fig. 3 dargestellte Spektrum setzt sich aus m Spektralwerten zusammen, die jeweils die (relative) Zahl der Röntgenquanten für einen bestimmten Impulsübertrag kennzeichnet; m kann dabei z.B. 1024 betragen. Da somit jedes Spektrum sich aus einer Vielzahl von Zahlenwerten zusammensetzt, kann es als Vektor im Sinne der eingangs gegebenen Definition aufgefaßt werden. Dieser Vektor wird als "Spektrum-Vektor" bezeichnet. Für den Spektrum-Vektor des Voxels mit der Position i gilt somit $X_i = (x_{1i}, x_{2i}, \ldots x_{mi})$. Ordnet man die n Spektrum-Vektoren für die n Voxel jeweils in den n Spalten in einer Datenmatrix **X** an, dann ergibt sich eine Matrix der Form

$$\mathbf{X} = \left\| \begin{matrix} x_{11} \cdots x_{1n} \\ \vdots \qquad \vdots \\ x_{m1} \cdots x_{mn} \end{matrix} \right\|$$

**X** ist somit eine (m x n)-Matrix, d.h. eine Matrix mit m Zeilen und n Spalten. In dieser Matrix sind Orts- und Spektralinformation kombiniert. Jede der Zeilen der Matrix zeigt die örtliche Abhängigkeit jeweils eines bestimmten Impulsübertrages für die verschiedenen Voxel; jede Spalte zeigt die spektrale Abhängigkeit für ein bestimmtes Voxel.

Der nächste Schritt (Block 102) besteht in der Singulärwert-Zerlegung der Datenmatrix in drei Matrizen **U, G, V**$^T$, deren Produkt gemäß

$$X = U\,G\,V^T \quad (2)$$

die Datenmatrix **X** ergibt. Die Singulärwert-Zerlegung ist ein bekanntes mathematisches Verfahren, das u.a. in den Büchern

a) G.H. Golub, C.F. van Loan, Matrix Computations, John Hopkins University Press, Baltimore, 1983, p. 16 - 20)
b) W.H. Press, B.P. Flannery, S.A. Teukolsky, W.T. Vetterling, Numerical Recipes, Cambridge University Press, 1986, p. 52 - 64,

beschrieben ist. Die Anwendung dieses Verfahrens in Verbindung mit der Spektrometrie ist aus der DE-OS 38 27 066 bekannt.

Die beiden Matrizen **U** und $\mathbf{V^T}$ haben die Form

$$\mathbf{U} = \begin{Vmatrix} u_{11} \cdots u_{1n} \\ \vdots \quad\quad \vdots \\ u_{m1} \cdots u_{mn} \end{Vmatrix} \quad \text{und} \quad \mathbf{V^T} = \begin{Vmatrix} v_{11} \cdots v_{1n} \\ \vdots \quad\quad \vdots \\ v_{n1} \cdots v_{nn} \end{Vmatrix}$$

Das bedeutet, daß die Matrix **U** ebenso wie die Datenmatrix **X** eine (m x n) - Matrix ist, während die Matrix $\mathbf{V^T}$ eine quadratische (n x n)-Matrix ist. Dies gilt allerdings nur, solange die Zahl n der Voxel, für die ein Spektrum gemessen worden ist, nicht größer ist als die Zahl m der Spektralwerte, aus denen sich ein Spektrum bzw. ein Spektrum-Vektor zusammensetzt. Ist diese Voraussetzung nicht erfüllt, dann ist die Matrix **U** eine quadratische (m x m)-Matrix, während $\mathbf{V^T}$ eine rechteckige (n x m)-Matrix ist.

Die Spalten-Vektoren, d.h. die Singulär-Vektoren, aus denen sich die erste Matrix **U** zusammensetzt, sind orthonormale Vektoren, d.h. sie ergeben den Wert 1, wenn sie skalar mit sich selbst multipliziert werden und den Wert 0, wenn sie skalar mit einem der anderen Spalten-Vektoren multipliziert werden. Ebenso sind die Singulär-Vektoren der dritten Matrix $\mathbf{V^T}$, also deren Zeilen-Vektoren, orthonormale Vektoren. **U** ist also eine Spalten-orthonormale Matrix und $\mathbf{V^T}$ eine Zeilen-orthonormale Matrix. Wenn die Spektrum-Vektoren in der Datenmatrix - wie vorausgesetzt - die Spalten-Vektoren bilden, dann enthalten die Spalten-Vektoren der ersten Matrix Information über die Spektren, während die Zeilen-Vektoren der dritten Matrix ortsabhängige Informationen enthalten. Wenn stattdessen die Spektrum-Vektoren $X_i$ in den Zeilen der Datenmatrix **X** angeordnet wären, dann würden die Spalten-Vektoren der ersten Matrix die Ortsinformation und die Zeilen-Vektoren der dritten Matrix Information über die Spektren enthalten.

Die zweite Matrix

$$\mathbf{G} = \begin{Vmatrix} g_1 & 0 & 0 & 0 & 0 \\ 0 & g_2 & 0 & 0 & 0 \\ 0 & 0 & g_3 & 0 & 0 \\ \cdot & \cdot & \cdot & \cdot & \cdot \\ 0 & 0 & 0 & 0 & g_n \end{Vmatrix}$$

ist eine Diagonalmatrix im Sinne der eingangs gegebenen Definition. Die von Null verschiedenen Matrixelemente sind die aus der Singulärwertzerlegung resultierenden Singulärwerte. Sie geben an, welches Gewicht der Spalten-Vektor der ersten Matrix hat, der in der gleichen Spalte liegt wie das betreffende Element, bzw. welches Gewicht der Zeilen-Vektor hat, der in derselben Zeile liegt wie das zugehörige Element der Diagonalmatrix. In Fig. 6 sind die zwanzig größten Singulärwerte der Diagonalmatrix **G** nach Größe sortiert in logarithmischem Maßstab dargestellt. Die Figuren 5a bis 5f zeigen die zu den ersten sechs Singulärwerten gehörenden Spalten-Vektoren der Matrix **U**, d.h. diejenigen Spalten-Vektoren, die innerhalb der Matrix **U** in derselben Spalte stehen wie der zugehörige Singulärwert innerhalb der Matrix **G**. Dementsprechend stellt Fig. 5a den mit dem größten Singulanvert verknüpften Spalten-Vektor der Matrix **U** und Fig. 5f den mit dem sechstgrößten Singulärwert verknüpften Spalten-Vektor dar.

Wie bereits erwähnt, enthalten die Spalten-Vektoren der ersten Matrix **U** spektralabhängige Informationen, und zwar stellt jeder Spalten-Vektor eine Linearkombination der Spektrum-Vektoren von den im Untersuchungsbereich

vorhanden Stoffen dar (weshalb man durch geeignete Linearkombinationen der Spalten-Vektoren die Spektrum-Vektoren der in dem Untersuchungsbereich enthaltenen Stoffe rekonstruieren kann). - In ähnlicher Weise stellen die Zeilen-Vektoren in der dritten Matrix $\mathbf{V^T}$ die ortsabhängige Dichteverteilung dar, und zwar beschreibt beispielsweise die zweite Zeile dieser Matrix die Ortsabhängigkeit der Dichte derjenigen (abstrakten) Komponente, deren Spektrum durch den zweiten Spalten-Vektor von **U** gebildet wird.

Die Figuren 5a bis 5f zeigen deutlich, daß das mit den Spalten-Vektoren korrelierte Rauschen umso ausgeprägter ist, je kleiner der zugehörige Singulärwert in der Matrix **G** ist. Der in Fig. 5f dargestellte mit dem sechstgrößten Singulärwert verknüpfte Spalten-Vektor enthält praktisch keine ausnutzbare Information mehr, sondern nur noch Rauschen. Mithin gibt es für den Untersuchungsbereich, in dem fünf verschiedene Stoffe angeordnet waren, nur fünf Spalten-Vektoren mit relevanter Spektralinformation.

Die Erfindung beruht auf der Erkenntnis, daß, wenn im Untersuchungsbereich allgemein r verschiedene Stoffe mit voneinander abweichendem Spektrum angeordnet sind, die Singulärwert-Zerlegung gerade r signifikante Matrixelemente der Diagonalmatrix bzw. Singulärwerte liefert. Unter idealen Meßbedingungen wären die übrigen Singulärwerte Null. In der Praxis ist diese Bedingung aber nicht erfüllt. Die weiteren Singulärwerte haben deshalb einen vom Rauschen und von den übrigen Meßfehlern abhängigen Wert. Sie sind jedoch signifikant kleiner als die r ersten Singulärwerte, wie Fig. 6 (für fünf verschiedene Stoffe) deutlich zeigt.

Aus diesem Grund ist es möglich und - wegen der Verringerung des Rechenaufwandes auch sinnvoll - die drei Matrizen **U**, **G** und $\mathbf{V^T}$ auf die Spalten bzw. Zeilen zu reduzieren, denen in der entsprechenden Spalte bzw. Zeile der Diagonalmatrix ein signifikanter Singulärwert zugeordnet ist. Dieser Schritt wird im Block 103 ausgeführt. Er bedeutet, daß beispielsweise der dritte Spalten-Vektor der Matrix U und der dritte Zeilen-Vektor der Matrix $\mathbf{V^T}$ gestrichen werden muß, wenn der Singulärwert in der dritten Zeile bzw. Spalte der Diagonalmatrix nicht signifikant ist. Weiterhin erweist es sich als zweckmäßig, die Matrizen nach Größe der Singulärwerte zu sortieren, so daß in der ersten Spalte der ersten Matrix und der ersten Zeile der dritten Matrix die Spalten- bzw. Zeilen-Vektoren angeordnet sind, die dem größten Singulärwert zugeordnet sind, - falls sich diese Ordnung nicht schon ohnehin aus der Singulärwert-Zerlegung ergibt. Durch die Reduzierung gehen die Matrizen **U** und **V** über in Matrizen $\mathbf{U_r}$ und $\mathbf{V_r}$ der Form

$$\mathbf{U_r} = \begin{Vmatrix} u'_{11} \cdots u'_{1r} \\ \vdots \quad\quad \vdots \\ u'_{m1} \cdots u'_{rn} \end{Vmatrix} \quad \text{und} \quad \mathbf{V_r}^T = \begin{Vmatrix} v'_{11} \cdots v'_{1n} \\ \vdots \quad\quad \vdots \\ v'_{r1} \cdots v'_{rn} \end{Vmatrix}$$

wobei $\mathbf{U_r}$ eine (m x r) Matrix und $\mathbf{V_r}^T$ eine (r x n) Matrix ist. Die Spalten-vektoren der Matrix und $\mathbf{U_r}$ sind mit je einem der Spalten-Vektoren von **U** identisch, und ebenso ist jeder Zeilen-Vektor von $\mathbf{V_r}^T$ mit je einem der Zeilen-Vektoren identisch. $\mathbf{G_r}$ eine Diagonalmatrix der Form

$$\mathbf{G_r} = \begin{Vmatrix} g'_1 & 0 & 0 & 0 & 0 \\ 0 & g'_2 & 0 & 0 & 0 \\ 0 & 0 & g'_3 & 0 & 0 \\ \cdot & \cdot & \cdot & \cdot & \cdot \\ 0 & 0 & 0 & 0 & g'_r \end{Vmatrix}$$

mit nur noch r Singulärwerten bzw. r Zeilen und Spalten. Die Singulärwerte $g'_1 ...... g'_r$ sind die r größten Werte der Singulärwerte ($g_1 ...... g_n$) von **G**. Man kann zeigen, daß die aus dem Produkt der drei Matrizen $\mathbf{U_r}$, $\mathbf{G_r}$ und $\mathbf{V_r}^T$ resultierende Matrix $\mathbf{X_r}$ der Datenmatrix **X** in sehr guter Näherung entspricht und eine geglättete Version dieser Matrix darstellt.

Die nächsten, in den beiden Blöcken 104 und 105 ausgeführten Schritte bestehen darin, durch eine Linearkombination der in der Matrix $\mathbf{U_r}$ noch enthaltenen Spalten-Vektoren dasjenige Spektrum $S_i$ zu ermitteln, das die bestmögliche Approximation an das Referenz-Spektrum $R_i$ des gesuchten Stoffes darstellt (z.B. Sprengstoff mit dem Referenz-Spektrum $R_1$ - vergl. Fig. 2a). Aufgrund der Tatsache, daß die Spalten-Vektoren $U_j$(j=1...r) der Matrix orthonormale Vektoren sind, ergibt sich der Koeffizient (bzw. der Gewichtungsfaktor), mit dem jeder der die spektrale Abhängigkeit beschreibenden Spalten-Vektoren der Matrix **U** in die Linearkombination eingeht, durch skalare Multiplikation dieses Spalten-Vektors $U_j$ (wobei sich der Vektor $U_j$ aus den Komponenten ($u_{1j}$, $u_{2j}$, ... $u_{mj}$) zusammensetzt), mit dem Vektor, der das Referenzspektrum $R_i$ des gesuchten Stoffes darstellt. Für den Koeffizienten $c_{ij}$ gilt also die Gleichung

$$c_{ij} = R_i \bullet U_j \quad (3)$$

wobei " • " die skalare Multiplikation bedeutet. Die Berechnung gemäß Gleichung (3) wird im Block 104 für alle r Spalten-Vektoren der Matrix $\mathbf{U}_r$ durchgeführt.

Nach der Berechnung der Koeffizienten $c_{ij}$ wird mit Hilfe dieser Koeffizienten die Linearkombination $S_i$ gebildet, die die bestmögliche Annäherung an das Referenzspektrum $R_i$ darstellt (Block 105). Die Berechnung von $S_i$ erfolgt dabei nach der Gleichung

$$S_i = \Sigma\, c_{ij} U_j \quad (4)$$

Die Summierung erfolgt dabei von j = 1 bis j = r.

Anschließend wird verglichen, ob der so gebildete Summenvektor $S_i$ wenigstens annähernd dem Referenzvektor $R_i$ entspricht (Block 106). In Fig. 7 sind der Referenzvektor $R_i$ = R1 (für Sprengstoff) und der gemäß den Gleichungen (3) und (4) berechnete Summenvektor $S_i$ dargestellt, wobei der Referenzvektor nur gestrichelt angedeutet ist. Man erkennt eine sehr gute Übereinstimmung, woraus folgt, daß der Stoff i (Sprengstoff) im Untersuchungsbereich identifiziert worden ist.

Die Auswertung, ob $R_i$ und $S_i$ wenigstens annähernd einander entsprechen, kann automatisch erfolgen, indem für jeden Spektralwert die Differenz zwischen $R_i$ und $S_i$ gebildet und quadriert wird und indem die so errechneten Quadrate für alle Spektralwerte addiert werden. Die Wurzel aus dieser Summe wird durch die Summe der Spektralwerte des Referenzspektrums $R_i$ (das ist die Fläche unter der Kurve $R_i$) dividiert. Unterschreitet der so gebildete Wert einen Alarm-Schwellenwert, dann kann von einer hinreichenden Übereinstimmung zwischen $S_i$ und $R_i$ ausgegangen werden bzw. davon, daß der gesuchte Stoff gefunden worden ist. In diesem Fall wird ein Alarm ausgelöst (Block 107), beispielsweise ein akustischer Alarm oder ein visueller Alarm, bei dem z.B. auf dem Monitor 8 (Fig. 1) die Spektren $R_i$ und $S_i$ angezeigt werden.

Wenn weitere Stoffe - mit einem anderen Referenzspektrum - detektiert bzw. identifiziert werden sollen, wird das zugehörige Referenzspektrum geladen (Schritt 108) und die Schritte 104 bis 106 werden erneut durchlaufen. Andernfalls endet das Programm (Block 109).

Die Identifikation einzelner Stoffe innerhalb eines Satzes von durch die Singulärwert-Zerlegung erhaltenen Vektoren ähnelt in gewisser Hinsicht den bekannten mathematischen Regressionsverfahren. Die Singulärwert-Zerlegung hat aber eine bessere numerische Stabilität. Sie kann auch dann ausgeführt werden, wenn nur das Spektrum des zu identifizierenden Stoffes bekannt ist. Die bekannten Regressionsverfahren erfordern hingegen, daß die Spektren aller im Untersuchungsbereich in signifikanter Menge vorhandener Stoffe bekannt sind.

Ein weiterer Vorteil des erfindungsgemäßen Verfahrens ist, daß damit die räumliche Verteilung von Stoffen bestimmt werden kann, wenn sämtliche im Untersuchungsbereich signifikant vorhandenen Stoffe sowie deren Referenz-spektren bekannt sind. Es gilt nämlich die Beziehung

$$C^T D = G_r \quad (5)$$

Dabei ist $\mathbf{G}_r$ die Matrix, die sich nach der Singulärwert-Zerlegung (Block 102) und der Reduktion auf die wesentlichen Elemente (Block 103) ergibt. $\mathbf{C}^T$ ist eine (r x r) Matrix, deren Zeilen-Vektoren durch die gemäß Block 104 jeweils für ein bekanntes Referenzspektrum $R_i$ bzw. einen bekannten Stoff ermittelten Koeffizienten gebildet wird. Sie wird dadurch komplettiert, daß die Koeffizienten gemäß Block 104 für die bekannten Spektren $R_1$ bis $R_r$ aller im Untersuchungsbeereich vorhandenen Stoffe berechnet werden. Die Matrixelemente der (r x r) Matrix **D** enthalten Informationen über die räumliche Verteilung. Sie sind unbekannt, können aber durch Lösung des durch Gleichung (5) dargestellten Gleichungssystems ermittelt werden. Nachdem auf diese Weise die Elemente der Matrix **D** ermittelt worden sind, kann daraus nach der Gleichung

$$B = V_r D^T \quad (6)$$

die Dichteverteilung errechnet werden. Dabei ist $\mathbf{V}_r$ die Transponierte der sich durch Singulärwert-Zerlegung und Reduzierung auf die signifikanten Komponenten ergebenden Matrix $\mathbf{V}_r^T$, d.h. $\mathbf{V}_r$ kann aus $\mathbf{V}_r^T$ durch Vertauschung von Zeilen und Spalten erzeugt werden. $\mathbf{V}_r$ ist mit eine (r x n)- Matrix (r Zeilen, n Spalten). $\mathbf{D}^T$ ist die Transponierte der Matrix **D**. Die aus der Multiplikation der Matrizen $\mathbf{V}_r$ und $\mathbf{D}^T$ resultierende Matrix **B** ist ebenfalls eine (n x r) Matrix, d.

h. sie besteht aus r Spalten-Vektoren mit je n Komponenten. Jeder Spalten-Vektor gibt für jeweils einen der r Stoffe, dessen räumliche Verteilung auf die n Voxel an.

Dieses Verfahren kann bei der Überwachung der Lebensmittelherstellung von Bedeutung sein. Dabei sind immer nur wenige Stoffe vorhanden, beispielsweise Schokolade, die durch Splitter von einem für die Herstellung benutzten Kunststoffwerkzeug verunreinigt sein kann. Die Referenzspektren dieses Kunststoffs und der Schokolade können vorab gemessen und abgespeichert worden sein, und es läßt sich dann mit diesem Verfahren bestimmen, wo innerhalb der Schokoladenmasse Kunststoffsplitter zu finden sind.

Wegen des durch Gleichung (5) angegebenen Zusammenhanges zwischen spektraler Information (in der Matrix $\mathbf{C}^T$) und räumlicher Information (in der Matrix **D**) läßt sich nicht nur die räumliche Verteilung von Stoffen mit bekanntem Spektrum bestimmen, sondern umgekehrt auch das Spektrum von Stoffen mit bekannter räumlicher Verteilung. In diesem Fall sind in Gleichung (6) die Matrizen **B** und $\mathbf{V_r}$ bekannt, so daß das Gleichungssystem nach $\mathbf{D}^T$ aufgelöst werden kann. Mit den dadurch gewonnenen Werten von $\mathbf{D}^T$ bzw. **D** läßt sich durch Auflösung des in Gleichung (5) angegebenen Gleichungssystems die Matrix $C^T$ errechnen, woraus sich gemäß Gleichung

$$A = U_r\, C^T \qquad (7)$$

eine Matrix **A** errechnen läßt, die aus r Spalten-Vektoren mit m Komponenten besteht. Jeder Spalten-Vektor stellt das Spektrum eines der r Stoffe dar.

## Patentansprüche

**1.** Untersuchungsverfahren, bei dem ein Objekt an einer Anzahl von Orten mit Röntgenstrahlung durchstrahlt wird und die darin elastisch gestreute Röntgenstrahlung gemessen wird und bei dem aus der Messung ein ImpulsübertragsSpektrum für den jeweiligen Ort ermittelt wird,
gekennzeichnet durch folgende Verfahrensschritte:

a) Bildung einer Datenmatrix (**X**) aus den Spektrum-Vektoren ($X_i$), die durch die Folge der Spektralwerte jeweils eines Spektrums gebildet werden, wobei die Spektrum-Vektoren ortsabhängig in den Spalten - oder in den Zeilen - der Datenmatrix angeordnet werden,
b) Singulärwert-Zerlegung der Datenmatrix zur Gewinnung dreier Matrizen (**U**, **G**, $\mathbf{V}^T$), deren Produkt der Datenmatrix entspricht, von denen die erste - bzw. die dritte - aus spektral-abhängigen Singulär-Vektoren ($U_j$) besteht, die zweite eine Diagonalmatrix (**G**) ist und die dritte - bzw. die erste - aus ortsabhängigen Singulär-Vektoren besteht.
c) Auswertung wenigstens einer der drei Matrizen.

**2.** Verfahren nach Anspruch 1,
dadurch gekennzeichnet, daß die nicht signifikanten Elemente der zweiten Matrix (**G**) eliminiert werden sowie die in den entsprechenden Spalten der ersten Matrix (**U**) und in den entsprechenden Zeilen der dritten Matrix ($\mathbf{V}^T$) enthaltenen Vektoren.

**3.** Verfahren nach Anspruch 1 oder 2,
dadurch gekennzeichnet, daß zur Identifizierung eines Stoffes mit vorbekanntem Spektrum ($R_i$)

a) der durch die Spektralwerte dieses Spektrums gebildete Spektrum-Vektor ($R_i$)mit den spektral-abhängigen Vektoren ($U_j$) skalar multipliziert wird,
b) mit den durch die skalare Multiplikation entstehenden Koeffizienten ($c_{ij}$) die zugehörigen spektral-abhängigen Vektoren ($U_j$) gewichtet und summiert werden,
c) und daß der aus der Summierung resultierende Summenvektor mit dem Spektrum-Vektor ($R_i$) des vorbekannten Spektrums verglichen wird.

**4.** Verfahren nach Anspruch 3,
gekennzeichnet durch seine Anwendung zur Detektion bestimmter Stoffe bei der Gepäckkontrolle.

**5.** Verfahren nach Anspruch 1 oder 2,
dadurch gekennzeichnet, daß zur Bestimmung der räumlichen Verteilung von Stoffen mit bekanntem Spektrum

a) die durch die Spektralwerte dieser bekannten Spektren gebildeten Vektoren ($R_i$) mit den spektral-abhängigen Vektoren ($U_j$) skalar multipliziert werden und
b) unter Heranziehung der dabei gewonnenen Koeffizienten ($C_{ij}$), der zweiten Matrix und der aus den ortsabhängigen Vektoren bestehenden Matrix die räumliche Verteilung der Stoffe bestimmt wird.

**6.** Verfahren nach Anspruch 1 oder 2,
dadurch gekennzeichnet, daß zur Bestimmung des Spektrums wenigstens eines von mehreren Stoffen, deren räumliche Verteilung innerhalb des Untersuchungsbereichs bekannt ist, die die räumliche Verteilung der einzelnen Stoffe definierenden Vektoren mit den ortsabhängigen Vektoren skalar multipliziert werden, und daß aus den dabei ermittelten Koeffizienten der zweiten Matrix und der die spektralabhängigen Vektoren enthaltenden Matrix die Spektren dieser Stoffe ermittelt werden.

**7.** Anordnung zur Durchführung des Untersuchungsverfahrens nach Anspruch 1,
gekennzeichnet durch

a) eine Meßeinrichtung (1, 2, 4 . . . 10) zur Messung je eines Spektrums für eine Vielzahl von Voxeln,
b) Mittel (10, 101) zur Bildung einer Datenmatrix (**X**)aus den Spektrum-Vektoren ($X_i$), die durch die Folge der Spektralwerte jeweils eines Spektrums gebildet werden, wobei die Spektrum-Vektoren ortsabhängig in den Spalten - oder in den Zeilen - der Datenmatrix angeordnet werden,
c) Mittel (10, 102) zur Singulärwert-Zerlegung der Datenmatrix zur Gewinnung dreier Matrizen **U, G, V**$^T$, deren Produkt der Datenmatrix entspricht, von denen die erste -bzw. die dritte - aus spektral-abhängigen Vektoren ($U_j$) besteht, die zweite eine Diagonalmatrix (**G**) ist und die dritte - erste - aus ortsabhängigen Vektoren besteht.
d) Mittel (10, 103 . . . 108) zur Auswertung wenigstens einer der drei Matrizen (**U, G, V**$^T$).

## Claims

**1.** An examination method whereby a respective spectrum with a number of spectral values is measured for a number of locations,
characterized in that it comprises the following steps:

a) formation of a data matrix (**X**) from the spectrum vectors ($X_i$) formed by the series of spectral values of a respective spectrum, the spectrum vectors being arranged in the columns (or the rows) of the data matrix in a location-dependent manner,
b) singular value decomposition of the data matrix in order to obtain three matrices (**U, G, V**$^T$) whose product corresponds to the data matrix, the first (third) matrix thereof consisting of spectrally dependent singular vectors ($U_j$), whereas the second matrix is a diagonal matrix (**G**) and the third (first) matrix consists of location-dependent singular vectors,
c) evaluation of at least one of the three matrices.

**2.** A method as claimed in Claim 1,
characterized in that the non-significant elements of the second matrix (**G**) are eliminated as well as the vectors present in the corresponding columns of the first matrix (**U**) and in the corresponding rows of the third matrix (**V**$^T$).

**3.** A method as claimed in Claim 1 or 2, characterized in that for the identification of a substance of known spectrum ($R_i$):

a) scalar multiplication is performed for the spectrum vector ($R_i$) formed by the spectral values of this spectrum and the spectrally dependent vectors ($U_j$),
b) the associated spectrally dependent vectors ($U_j$) are weighted by the coefficient ($c_{ij}$) produced by the scalar multiplication and subsequently summed,
c) and that the sum vector resulting from the summing operation is compared with the spectrum vector ($R_i$) of the known spectrum.

**4.** A method as claimed in Claim 3, characterized in that it is used for the detection of given substances in luggage inspection.

**5.** A method as claimed in Claim 1 or 2,

characterized in that for the determination of the spatial distribution of substances of known spectrum:

a) scalar multiplication is performed for the vectors ($R_i$) formed by the spectral values of these known spectra and the spectrally dependent vectors ($U_j$), and
b) the spatial distribution of the substances is determined while taking into account the coefficient ($c_{ij}$) thus obtained as well as the second matrix and the matrix consisting of the location-dependent vectors.

**6.** A method as claimed in Claim 1 or 2, characterized in that for the determination of the spectrum at least one of several substances whose spatial distribution within the examination zone is known, the vectors defining the spatial distribution of the individual substances are subjected to scalar multiplication by the location-dependent vectors, and that the spectra of these substances are determined from the coefficient thus determined, from the second matrix and from the matrix containing the spectrum-dependent vectors.

**7.** A device for carrying out the examination method claimed in Claim 1, characterized in that it comprises

a) a measuring device (1, 2, 4 ... 10) for measuring a respective spectrum for a plurality of voxels,
b) means (10, 101) for forming a data matrix (**X**) from the spectrum vectors ($X_i$) formed by the series of spectral values of a respective spectrum, the spectrum vectors being arranged in the columns (or in the rows) of the data matrix in a location-dependent manner,
c) means (10, 102) for singular value decomposition of the data matrix in order to obtain three matrices (**U, G, V**$^T$) whose product corresponds to the data matrix, the first (third) matrix consisting of spectrally dependent vectors ($U_j$), whereas the second matrix is a diagonal matrix (**G**) and the third (first) matrix consists of location-dependent vectors,
d) means (10, 103 ... 108) for evaluating at least one of the three matrices (**U, G, V**$^T$).

**Revendications**

**1.** Procédé d'inspection dans lequel un objet est examiné par radioscopie sur un nombre de localisations avec des rayons X et les rayons X, qui y sont élastiquement dispersés, sont mesurés, et dans lequel, à partir de la mesure, un spectre de report d'impulsions pour chaque endroit est déterminé,
caractérisé par les étapes de procédé suivantes :

a) formation d'une matrice de données (**X**) à partir des vecteurs spectre ($X_i$) qui sont formés par la suite des valeurs spectrales chaque fois d'un spectre, les vecteurs spectre étant agencés de manière dépendante de la localisation dans les colonnes - ou dans les lignes - de la matrice de données;
b) analyse de valeur singulière de la matrice de données pour la production de trois matrices (**U, G, V**$^T$) dont le produit correspond à la matrice de données, parmi lesquelles la première ou, selon le cas, la troisième, est constituée de vecteurs singuliers dépendant du spectre ($U_j$), la seconde est une matrice diagonale (**G**) et la troisième ou, selon le cas, la première, est constituée de vecteurs singuliers dépendant de la localisation, et
c) évaluation d'au moins une des trois matrices.

**2.** Procédé suivant la revendication 1, caractérisé en ce que les éléments non significatifs de la deuxième matrice (**G**) sont éliminés ainsi que les vecteurs contenus dans les colonnes correspondantes de la première matrice (**U**) et dans les lignes correspondantes de la troisième matrice (**V**$^T$).

**3.** Procédé suivant la revendication 1 ou 2, caractérisé en ce que, pour identifier une matière avec un spectre connu à l'avance ($R_j$),

a) le vecteur spectre ($R_i$) formé par les valeurs spectrales de ce spectre est scalairement multiplié avec les vecteurs dépendant du spectre ($U_j$);
b) les vecteurs dépendant du spectre associés ($U_j$) sont pondérés et totalisés avec les coefficients résultant de la multiplication scalaire ($c_{ij}$), et en ce que
c) le vecteur total résultant de la totalisation est comparé avec le vecteur spectre ($R_j$) du spectre connu à l'avance.

**4.** Procédé suivant la revendication 3, caractérisé par son application pour la détection de matières déterminées lors du contrôle de bagages.

**5.** Procédé suivant la revendication 1 ou 2 caractérisé en ce que, pour déterminer la répartition spatiale de matières avec un spectre connu,

a) les vecteurs ($R_i$) formés par les valeurs spectrales de ces spectres connus sont scalairement multipliés avec les vecteurs dépendant du spectre ($U_j$), et
b) sous l'attrait des coefficients produits en l'occurrence ($C_{ij}$) de la deuxième matrice et de la matrice constituée des vecteurs dépendant de la localisation, la répartition spatiale des matières est déterminée.

**6.** Procédé suivant la revendication 1 ou 2, caractérisé en ce que, pour la détermination du spectre, d'au moins une parmi plusieurs matières, dont la répartition spatiale à l'intérieur de la zone à inspecter est connue, les vecteurs définissant la répartition spatiale des matières isolées sont scalairement multipliés avec les vecteurs dépendant de la localisation, et en ce que, à partir des coefficients de la deuxième matrice déterminés en l'occurrence et de la matrice contenant les vecteurs dépendant de la localisation, les spectres de ces matières sont déterminés.

**7.** Agencement pour exécuter le procédé d'inspection suivant la revendication 1, caractérisé par :

a) un système de mesure (1, 2, 4... 10) pour mesurer chaque spectre pour une pluralité de Voxels;
b) un moyen (10, 101) pour former une matrice de données (**X**) à partir des vecteurs spectre ($X_i$) qui sont formés par la suite des valeurs spectrales chaque fois d'un spectre, les vecteurs spectre étant agencés de manière dépendante de la localisation dans les colonnes - ou dans les lignes de la matrice de données;
c) un moyen (10, 102) pour l'analyse de valeur singulière de la matrice de données pour la production de trois matrices **U, G, V**$^T$, dont le produit correspond à la matrice de données, parmi lesquelles la première ou, selon le cas, la troisième, est constituée de vecteurs dépendant du spectre ($U_j$), la deuxième est une matrice diagonale (**G**) et la troisième - la première - est constituée de vecteurs dépendant de la localisation, et
d) un moyen (10, 103 ... 108) pour évaluer au moins une des trois matrices (**U, G, V**$^T$).

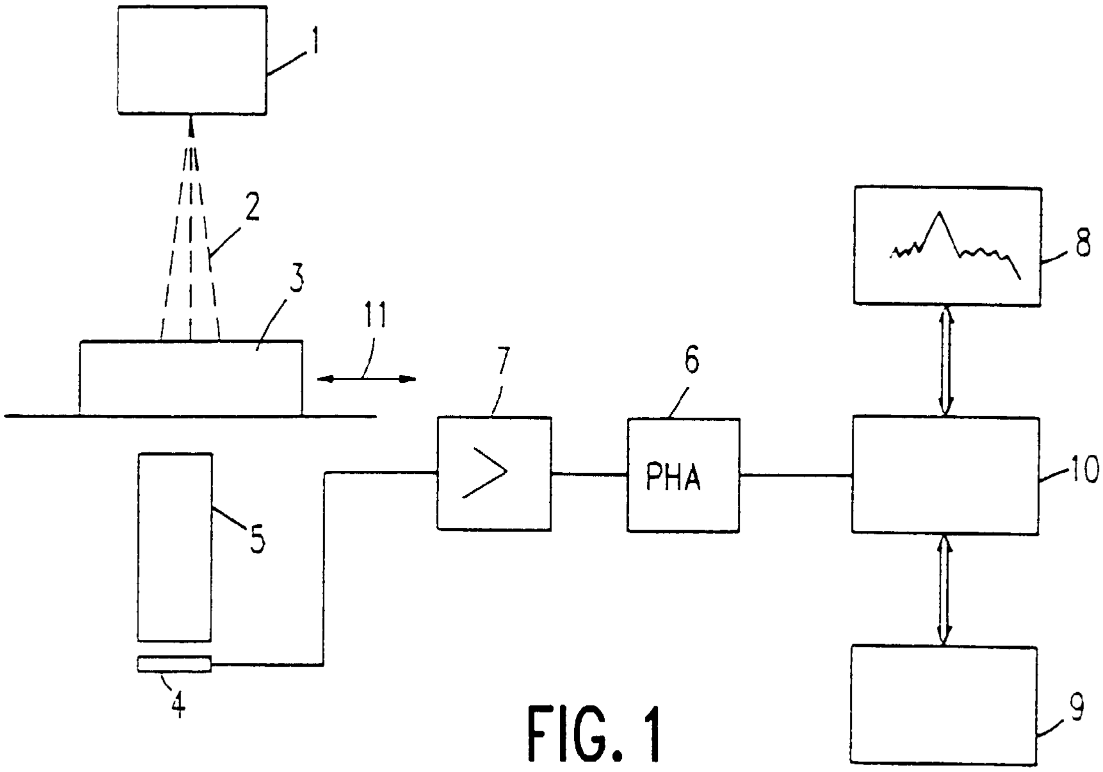


FIG. 1

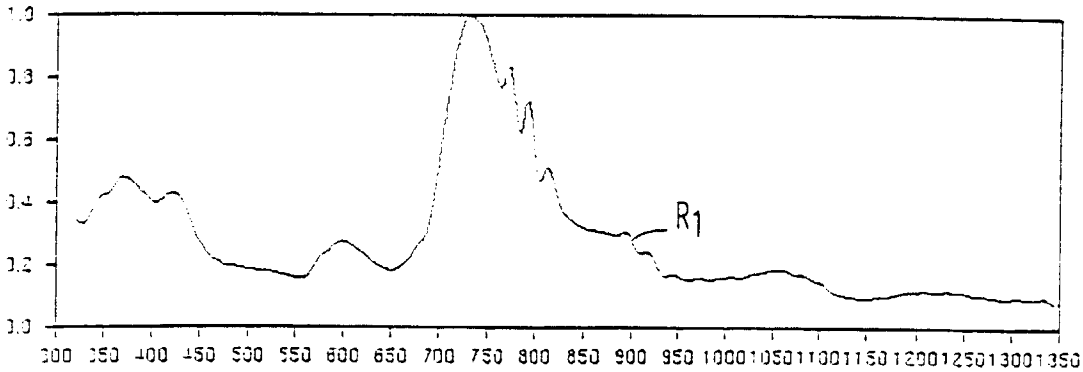


FIG. 2a

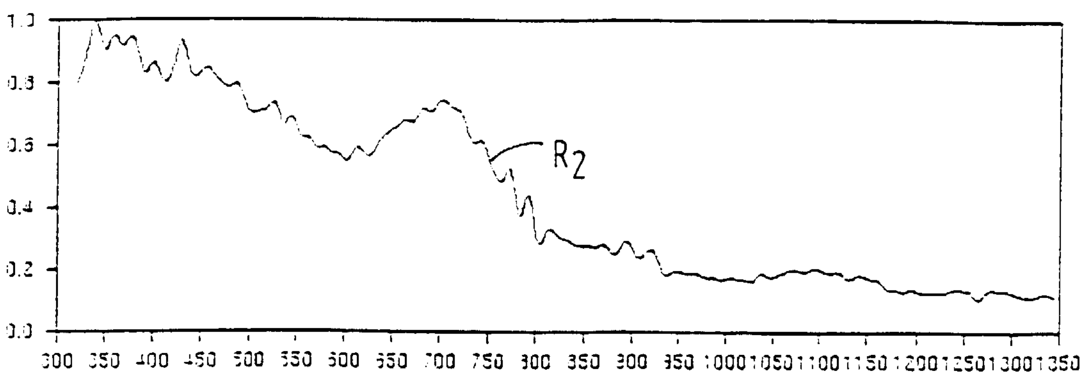


FIG. 2b

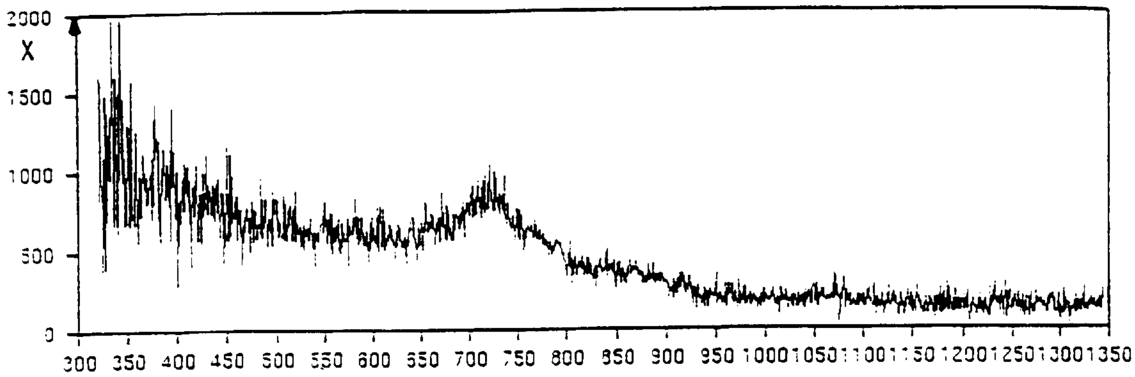


FIG.3

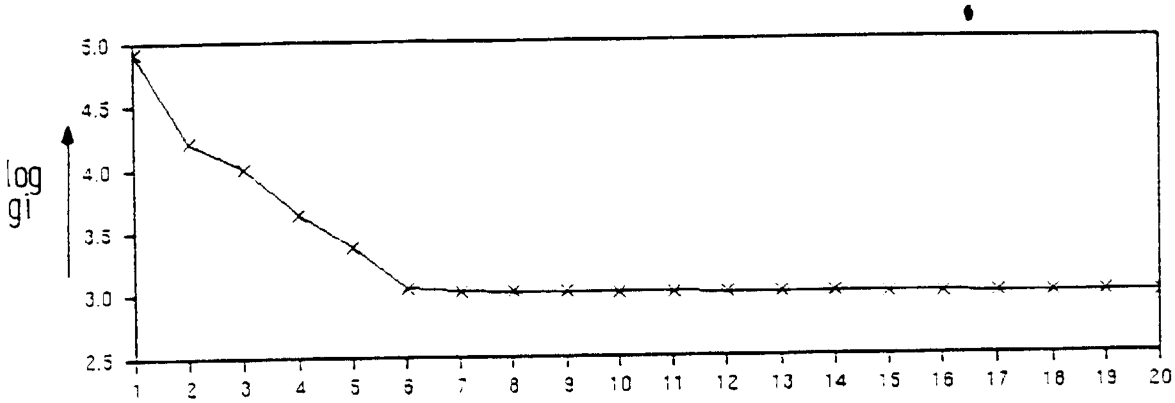


FIG.6

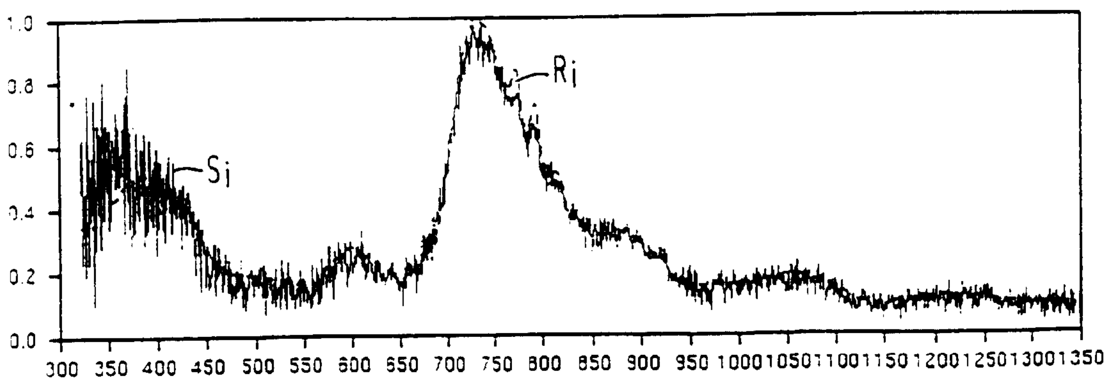


FIG.7

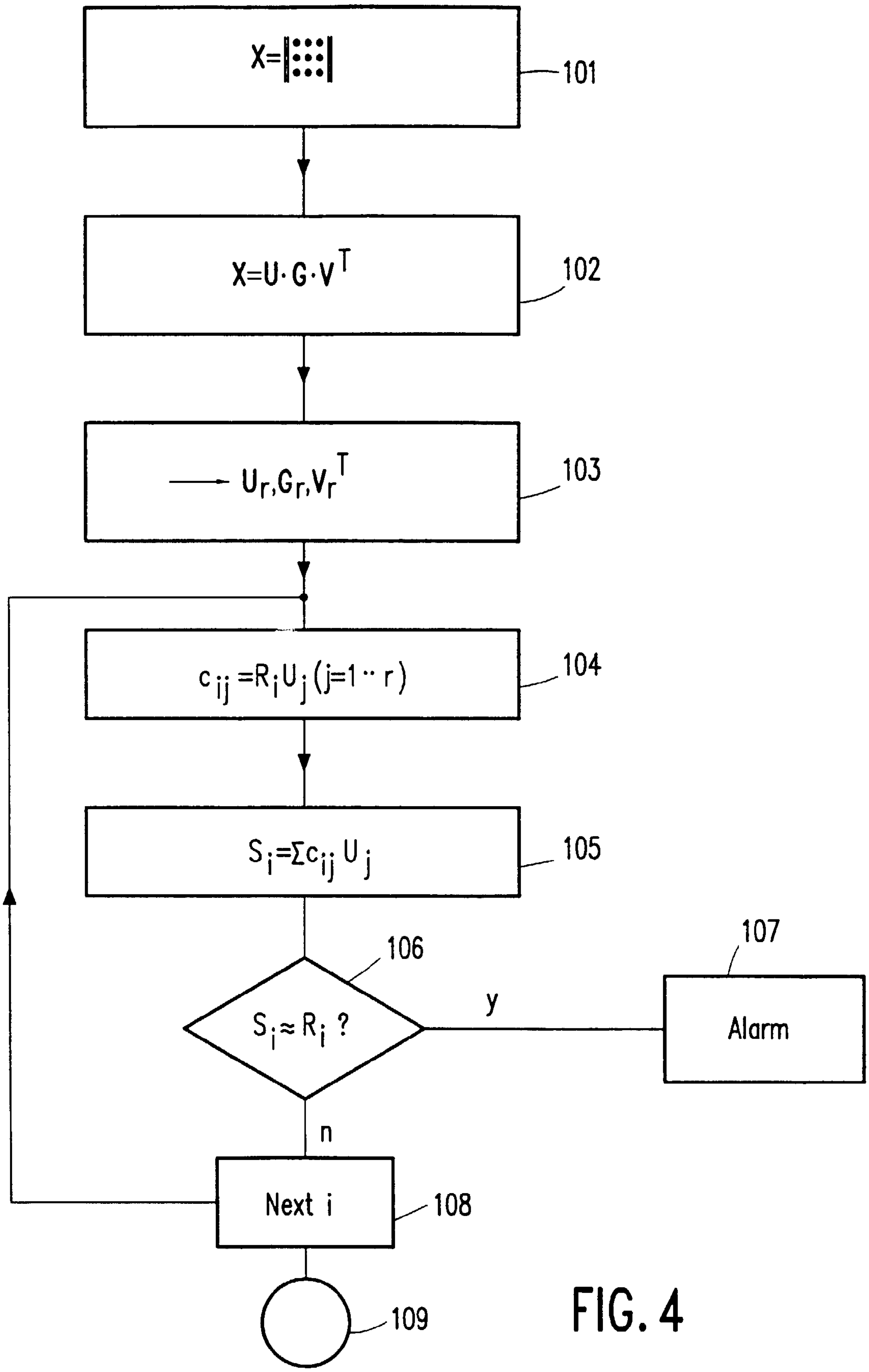

X=|::::|
101
X=U·G·V^T
102
→ U_r,G_r,V_r^T
103
c_ij =R_i U_j (j=1 ·· r)
104
S_i=Σc_ij U_j
105
106
S_i≈R_i ?
y
107
Alarm
n
Next i
108
109


FIG. 4

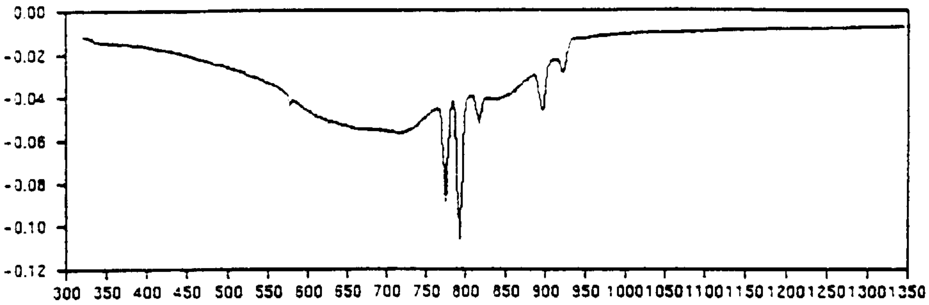


FIG. 5a

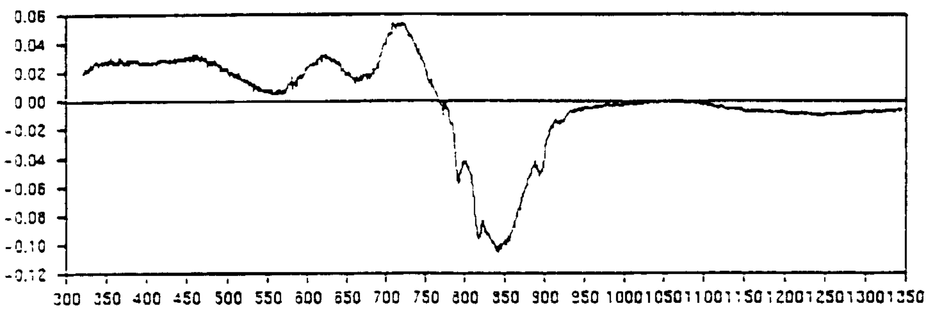


FIG. 5b

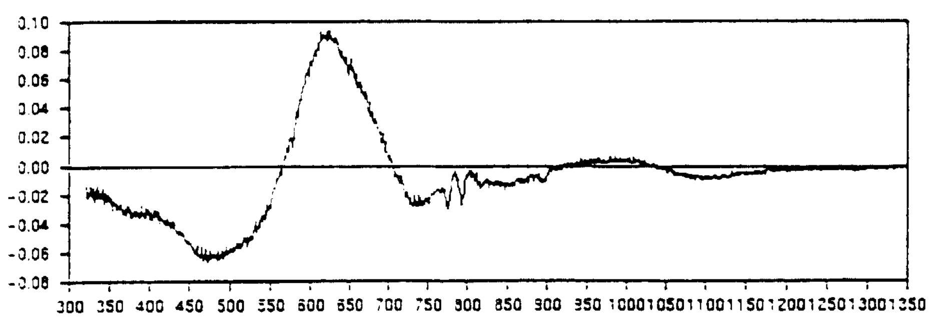


FIG. 5c

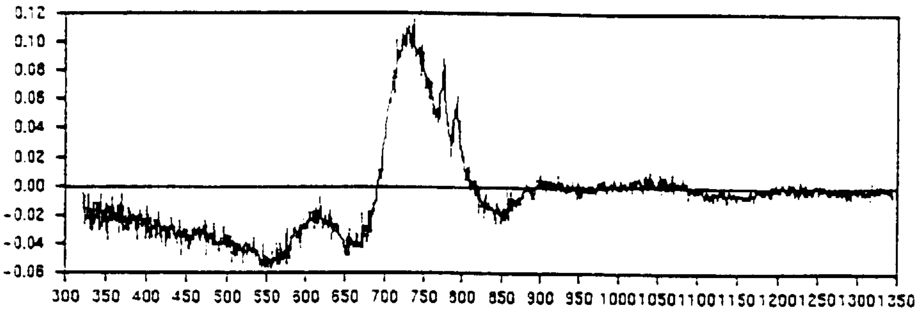


FIG. 5d

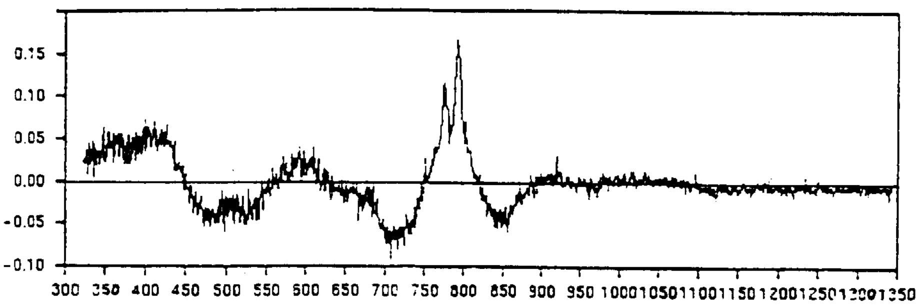


FIG. 5e

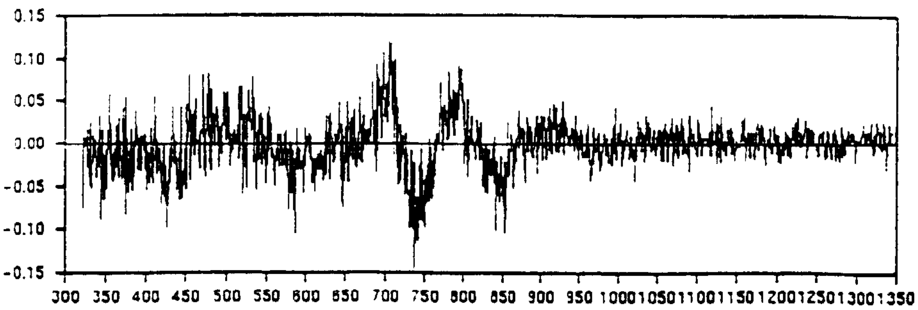


FIG. 5f